# EUROPÄISCHE PATENTSCHRIFT

(11) **EP 2 849 158 B1**
(45) Veröffentlichungstag und Bekanntmachung des Hinweises auf die Patenterteilung: **27.02.2019**
(21) Anmeldenummer: 13184302.1
(22) Anmeldetag: 13.09.2013
(51) Int. Cl.: G07B 15/02, G06F 21/77, G06K 19/073, G07F 7/08

(54) **e-Ticket mit Manipulationsschutz**
Electronic ticket with manipulation protection
Ticket électronique avec protection anti-manipulation

(43) Veröffentlichungstag der Anmeldung: 18.03.2015
(73) Patentinhaber: Siemens Schweiz AG, 8047 Zürich (CH); Siemens Mobility GmbH, 81739 München (DE)
(72) Erfinder: Eberhardt, Uwe, 81539 München (DE); Glänzer, Martin, 85579 Neubiberg (DE); Kalbermatter, Marcel, 3940 Steg (CH); Roskosch, Richard, 85521 Ottobrunn (DE)
(74) Vertreter: Maier, Daniel Oliver

(56) Entgegenhaltungen:
- EP-A2- 1 804 560
- DE-A1- 19 738 990
- DE-A1-102009 043 617
- DE-B3- 10 326 089

## Beschreibung

Die vorliegende Erfindung bezieht sich auf ein e-Ticket mit Manipulationsschutz gemäss dem Patentanspruch 1.

Die generelle Funktionalität und die Anforderungen an ein e-Ticketing-System in einem Fahrzeug des öffentlichen Verkehrs kann beispielsweise den in [2] und [3] angegebenen Quellen entnommen werden. Elektronische Billette bzw. elektronische Fahrscheine sind auch unter dem Begriff e-Tickets bekannt. Im Folgenden werden die vorgenannten zwei Begriffe kurz unter e-Ticket subsumiert. Ebenso werden Fahrzeuge des OeV - wie auch Kursschiffe - unter dem Begriff (öffentliches) Verkehrsmittel subsumiert.

Aus der Schrift EP 1 201 693 B1 [1] ist ein BiBo-Verfahren und ein System zur Erfassung von elektronischen Billette (e-Ticket) bekannt. Dem in der Schrift [1] offenbarten System liegt folgende Funktionalität zugrunde:
Aus Gründen der Autonomie befinden sich die Billette in einem Schlafzustand. Beim Eintritt in ein Verkehrsmittel werden die e-Tickets durch ein Nahfeld, z.B. 6.78MHz geweckt und unidirektional mit einer ID sowie einer Timing Information «gestempelt». Die ID bezieht sich auf den im Eingangsbereich befindlichen Wecksender und die Timing Information auf Beginn und Intervall einer bidirektionalen Kommunikation zwischen e-Ticket und einer im Wagen befindlichen Sende- und Empfangseinheit. Durch das Protokoll können bei diesem System Fehlerfassungen und Manipulationen verhindert werden, so z.B.
- Parallelfahrt auf einem Velo oder durch Parallelfahrt zweier Züge
- Betrugsversuche durch temporäres Versorgen des e-Tickets in eine metallene Zigarettenschachtel.

In EP 1 287 585 B1 [4] ist ein e-Ticket offenbart, das folgende Problemstellung löst:
Die Übertragung mittels Frequenzen der Grössenordnung von z.B. 6.78MHz würde grosse Antennen mit Abmessungen von mehreren Metern benötigen. In vielen Fällen ist die maximale Grösse der Antenne jedoch durch die Abmessungen eines Gerätes oder eines Trägerelementes vorgegeben. Für kontaktlose Erfassungssysteme muss die Empfangsantenne z.B. auf die Abmessungen einer Chipkarte reduziert werden. Solche Chipkarten haben üblicherweise Abmessungen von Kreditkarten, nämlich 53 x 85mm2. Eine derartig starke Reduktion der Antennengrösse führt einerseits zu sehr geringen Antennen-Empfangsspannungen und andererseits zu einer erhöhten Sensitivität der Antennenspannung auf Umgebungseinflüsse. Bei tragbaren Empfängern stellt sich darüber hinaus das Problem, dass z.B. durch die Hand eines Menschen oder durch in der Nähe befindliche elektrisch leitende Körper der Empfang gestört wird. Die Störung beinhaltet beispielsweise eine Verstimmung der Antenne.

Es ist mit Fahrgästen mit unlauteren und unedlen Absichten zu rechnen. Diese Art von Fahrgästen kann versuchen, die Erfassung eines e-Tickets so zu manipulieren, dass eine reguläre Abrechnung nicht erfolgt oder nicht erfolgen kann. Einerseits müssen deshalb für ein e-Ticketsystem zumindest rudimentäre Trage- und Benutzungsvorschriften für die Fahrgäste erlassen werden. Diese Vorschriften sollen verhindern, dass das e-Ticket mehr oder weniger vollständig abgeschirmt getragen wird, beispielsweise in einem Rucksack zwischen zwei metallenen Lawinenschaufeln oder in einer metallenen Zigarettenschachtel. Andererseits muss es auch entsprechende systemtechnische Vorkehrungen geben, um auch mechanische Manipulationen zu verhindern. Es ist darüber hinaus mit besonders unlauteren und hinsichtlich elektronischer Bauelemente besonders fachkundigen Fahrgästen zu rechnen, die ein e-Ticket öffnen und schaltungstechnische Eingriffe vornehmen. Es versteht sich, dass die Billette dann wieder - von aussen her gesehen - eigentlich keine Spuren des unbefugten Öffnens tragen.

Ausgehend von dem nächstliegenden Stand der Technik, welcher in der Schrift DE 103 26 089 B3 [5] offenbart ist, die sich mit dem Schutz von unter anderem in e-Tickets vorhandenen Schaltungen vor Manipulationen befasst und wo Leiterbahnen als abschirmende Struktur um eine Schaltung geführt werden, so dass die Leiterbahnen die Schaltung gegen außen schützen und die Schaltung bei schaltungstechnischen Manipulationen ausser Betrieb gesetzt wird, liegt der vorliegenden Erfindung daher die Aufgabe zugrunde, ein e-Ticket anzugeben, das sich bei unbefugtem Öffnen und/oder allfälligen schaltungstechnischen Manipulationen noch sicherer schützen lässt.

Die Aufgabe des Erkennens von unbefugtem Öffnen eines e-Tickets und/oder allfälligen schaltungstechnischen Manipulationen an einem e-Ticket wird durch die im Patentanspruch 1 angegebenen Massnahmen gelöst. Vorteilhafte Ausgestaltungen der Erfindung sind in weiteren Ansprüchen angegeben.

Das Prinzip der vorliegenden Erfindung besteht in der Schaffung eines Kondensators um die Leiterplatte. Die Leiterplatte ist von einer Abdeckung umgeben, die auf der der Leiterplatte zugewandten Seite eine metallische Struktur aufweist, die mit Bauelementen auf der Leiterplatte gekoppelt ist, wobei eine Entfernung, d.h. Wegnahme der metallischen Struktur (32) eine Kapazitätsänderung bewirkt, die von der Schaltung auf der Leiterplatte detektierbar ist. Diese Detektion bewirkt aktiv eine Ausserbetriebnahme des e-Tickets. Zusätzlich werden auf den Gehäuseinnenseiten nicht nur die metallische, leitfähige Struktur angeordnet, sondern zusätzlich flache RFID-Marken aufgeklebt, die einen RFID-Chip und eine zugehörige Antennenstruktur beinhalten. Auf der Leiterplatte befinden sich eine Antennenspule und ein Schaltungsteil, mit dem die RFID-Marken abgefragt werden können. Wird die «Lesereichweite» der beschriebenen Anordnung sehr klein im Bereich von wenigen Zehntel Millimetern gewählt, kann ebenfalls das Abheben der Abdeckung erkannt werden.

Durch diese hier «inhärente Lösung» ist sichergestellt, dass auch die auf dem Gebiet von Chipkarten sehr fachkundige Person zwar den optischen-mechanischen Normalzustand eines e-Tickets wieder herstellen kann, dass aber aufgrund der detektierten Kapazitätsänderung das e-Ticket nicht mehr erfasst wird. In einer besonderen Ausführungsform der Erfindung kann die Ausserbetriebnahme so ausgestaltet sein, dass das Ticket für Überwachungszwecke noch aktiv ist und von einem Hintergrundsystem als «faked» bzw. manipuliert erkannt wird und eine entsprechende Registrierung/Alarmierung ausgelöst wird.

Die Erfindung wird nachfolgend anhand von Zeichnungen beispielsweise näher erläutert. Dabei zeigen:
Figur 1 Ansicht der Innenseite eines e-Tickets, das eine Abdeckung enthält;
Figur 2a Ersatzschaltbild bei einer abgenommenen Abdeckung;
Figur 2b Ersatzschaltbild bei einer korrekt vorhandenen und montierten Abdeckung;

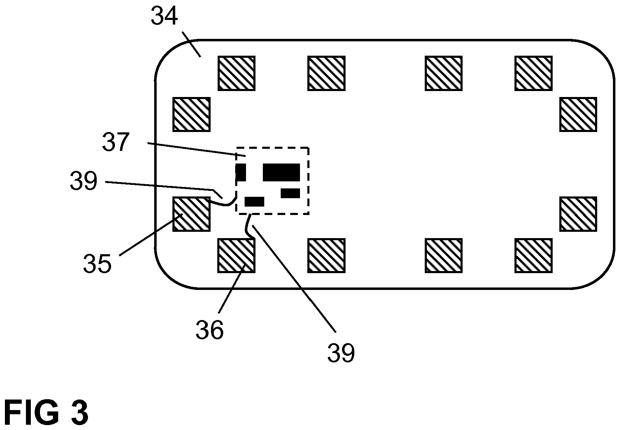

Figur 3 Abbildung der Leiterplatte mit metallisierten Flächen zur elektromagnetischen Kopplung sowie einer Auswerte-Schaltung im e-Ticket;
Figur 4 Abbildung der Leiterplatte mit metallisierten Flächen zur elektromagnetischen Kopplung sowie einer Auswerte-Schaltung.

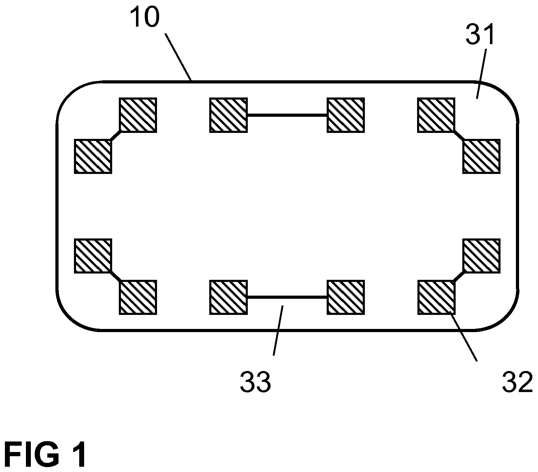

Figur 1 zeigt eine Ansicht auf die Innenseite eines e-Tickets 10, das eine Abdeckung 31 enthält. Die Abdeckung 31 ist vorzugsweise aus Kunststoff, ebenso kann auch Papier als Material für die Abdeckung 31 verwendet werden. Gezeigt sind in der Figur 1 ausserdem metallisierte Flächen 32 und leitfähige Verbindungen 33, die ebenfalls auf der Innenseite der Abdeckung 31 angebracht sind. Die leitfähigen Verbindungen 33 bewirken eine galvanische Verbindung/Kopplung der metallisierten Flächen 32.

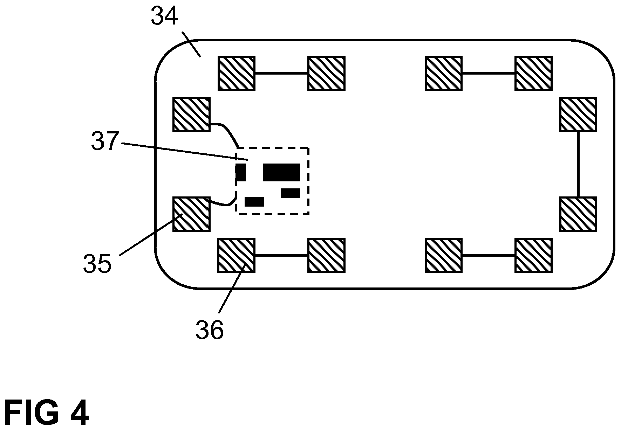

Eine Manipulation - sei sie nun befugt oder nicht - eines e-Tickets 10 über das Öffnen wird wie folgt detektiert:
A) Wichtige Gehäuseteile/Komponenten des e-Tickets 10 sind auf der Innenseite mit leitfähigen, vorzugsweise metallisierten Strukturen 32 und leitfähigen Verbindungen 33 zwischen diesen Strukturen versehen. Diese Strukturen 32 sind mit elektronischen Bauelementen im e-Ticket 10 entweder galvanisch verbunden oder/und über elektromagnetische Felder gekoppelt.
B) Wird nun versucht, ein e-Ticket 10 zum Zwecke der schaltungstechnischen Manipulation zu öffnen, beispielsweise durch Abheben von Abdeckungen oder durch Aufbrechen des e-Tickets, so wird während dieses Vorgangs die galvanische Verbindung 33 zwischen den metallisierten Strukturen 32 und den Schaltungsteilen im Fahrschein unterbrochen. Gleiches gilt für eine feldgekoppelte Anbindung der metallisierten Strukturen 32 an die elektronischen Bauelementen im e-Ticket 10. Dadurch kann eine Veränderung in der Ankopplung festgestellt werden. Die Feststellung der Veränderung kann beispielsweise analog erfolgen wie in der Schrift EP 1 287 585 B1 mit der sogenannten Antennenspannung.
C) Im dargestellten Beispiel sind je 2 metallisierte Strukturen 32 über eine Leitung 33 miteinander verbunden. Diese Anordnungen sind in Bezug auf die genutzte Fläche begrenzt und es sind nicht mehrere solcher Strukturen galvanisch miteinander verbunden, da sich im e-Ticket 10 für dessen eigentliche Funktion eine oder mehrere Antennen bzw. Antennenstrukturen befinden, deren Eigenschaften durch das beschriebene System zum Schutz vor Manipulationen möglichst nicht oder nur geringfügig beeinträchtigt werden sollen. So werden ausgedehnte galvanisch miteinander verbundene Strukturen vermieden. Es ist jedoch unter Umständen möglich, mehrere solcher Strukturen über weitere Koppelstrecken miteinander zu verbinden, um mit einer geringeren Anzahl an AuswerteSchaltungen bzw. mit nur einer einzigen Auswerteschaltung auszukommen. Eine entsprechende Lösungsmöglichkeit hierzu ist in Fig. 4 abgebildet. Fig. 4 zeigt ein e-Ticket 10 mit mehreren miteinander verschalteten Strukturen zur Verringerung der Anzahl notwendiger Auswerteschaltungen. Die Koppelflächen 35 und 36 sind jeweils so miteinander verbunden, dass sich in Verbindung mit der in Fig. 1 dargestellten Anordnung der metallisierten Flächen 32 und den zugehörigen Verbindungen 33 eine Gesamtanordnung mit vielen Koppelstellen ergibt, die mit nur einer einzigen Auswerteschaltung überwacht werden kann. Die Darstellung in Fig. 4 ist im Verglich zur Darstellung in Fig. 1 gespiegelt dargestellt, da die Abdeckung ja mit den Koppelflächen zur Leiterplatte hin aufgeklebt wird.
D) Da die e-Tickets 10 in der Regel mit einem Energiespeicher wie z.B. einer Batterie ausgestattet sind, steht ständig eine Spannungsversorgung zur Verfügung, die die Schaltungsteile/Bauelemente zur Überwachung speist. Wird ein Manipulationsversuch aufgrund einer geänderten Antennenspannung oder eines Unterbruchs erkannt, so ist die Beschaltung des e-Tickets 10 so ausgestaltet, dass sich das e-Ticket 10 daraufhin selbständig und unwiderruflich sperrt, wodurch eine missbräuchliche Nutzung verhindert wird. Diese Sperrung kann auch beinhalten, dass durch Anlegen der Batteriespannung an ein Bauteil sich das e-Ticket 10 selber zerstört. Ebenso kann eine Selbstzerstörung durch Löschen eines im e-Ticket enthaltenen Software-Schlüssels, der für einen Abrechnungsvorgang benötigt wird, erfolgen.

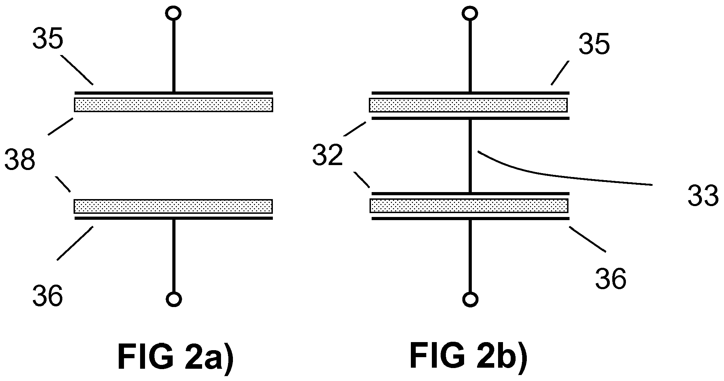

Figur 2a und 2b zeigen Ersatzschaltbilder dieses Schutzes vor Manipulationen.

Die Figur 2b zeigt die Situation eines originären bzw. nicht manipulierten -Tickets 10. In funktionaler Hinsicht liegt hier eine Kondensatoranordnung vor. Figur 2b zeigt die Ersatzschaltung für eine mit den Strukturen 32 und 33 gebildete Kondensatoranordnung. Auf der diesen metallisierten Flächen gegenüberstehenden Leiterplatte (also solche im Ersatzschaltbild in Figur 2a) und Figur 2b) nicht dargestellt, befinden sich wiederum metallisierte Flächen 35 und 36, die kapazitiv mit den Flächen 32 auf der Innenseite der Abdeckung verkoppelt sind. Die in Figur 2b) dargestellte Kondensatoranordnung wird beispielsweise so mit einer Oszillatorschaltung auf der Leiterplatte verbunden, dass die Kondensatoranordnung die Frequenz des Oszillators entsprechend der gebildeten Kapazität beeinflusst.

Bei korrekt vorhandener Abdeckung gemäss der Figur 2b) stellt sich eine bestimmte Frequenz ein. Das Ausgangssignal des Oszillators wird z. B. dem steuernden Mikrocontroller auf der Karte zugeführt und die Schwingfrequenz ermittelt. Liegt die Schwingfrequenz innerhalb eines vergleichbar kleinen Bereiches um den Sollwert herum, so liegt kein Manipulationsversuch vor. Unterscheidet sich die aktuelle Schwingfrequenz hingegen von diesem Sollwert, so kann von einem Manipulationsversuch ausgegangen werden und es sollte die selbständige Sperrung des e-Tickets 10 ausgelöst werden.

Die beschriebene Auslegung erfolgt so, dass Metallteile oder ähnliches (z. B. Schlüsselbund) in der Nähe keine allzu großen Schwankungen in der Schwingfrequenz hervorrufen und damit keine fehlerhafte Sperrung des e-Tickets 10 bewirkt wird. Eine fälschlicherweise ausgelöste Sperrung des e-Tickets 10 wird auch durch den Umstand verhindert, dass bei vorhandener Abdeckung ja die sensiblen Bereiche oberhalb der Metallflächen auf der Leiterplatte abdeckt / nach außen hin etwas abschirmt sind und hier Einkopplungen von außen erschwert werden.

Andererseits verändert sich die Oszillatorfrequenz bereits beim Anheben einer Ecke der e-Ticket-Abdeckung 31 bereits beträchtlich, so dass Manipulationsversuche eindeutig detektiert werden, die Entfernung einer Abdeckung ist in Figur 2a) gezeigt.

Die selbständige Sperrung des kann auf vielerlei Art erfolgen. Eine Möglichkeit wäre, eine entsprechende Funktion in einem sowieso mit hoher Wahrscheinlichkeit eingesetzten Security Controller (zur Verschlüsselung/Authentifizierung) vorzusehen. Im Falle einer erkannten Manipulation wird z. B. vom steuernden Prozessor im e-Ticket 10 ein bestimmter Code an den Security Controller weitergegeben, wird dort eine Funktion zum Löschen des enthaltenen Schlüssels ausgelöst. Diese Funktion sollte nicht mehr rückgängig gemacht werden können.

Eine weitere Möglichkeit würde ein entsprechender Vermerk in im e-Tickets 10 enthaltenen Flash- oder EEPROM-Speicherzellen darstellen: Das e-Tickets 10 kann dann nicht mehr zur Abrechnung herangezogen werden. Zusätzlich könnte das e-Tickets 10 seinen Sperrvermerk an das Hintergrundsystem melden, wenn sich im späteren Verlauf wieder ein Funkkontakt zu einem Lesegerät im Wagen ergibt. Idealerweise sollte nach einem erkannten Manipulationsversuch das e-Ticket 10 auf mehreren Wegen gesperrt werden: z. B. Löschen des Schlüssels im Security Controller und Setzen entsprechender Marken in nichtflüchtigen Speicherzellen mit Meldung an das Hintergrundsystem, wenn später ein Funkkontakt zu einem Lesegerät im Wagen zustande kommen sollte.

Eine einfachere Lösung zur dauernden Ausserbetriebnahme eines e-Tickets 10 kann durch Löschen eines Festwertspeichers erfolgen, in diesem Fall ist dann eine weitere Kommunikation mit dem Hintergrundsystem nicht mehr möglich.

Auch der vorübergehende Ausfall der Betriebsspannung sollte erkannt und als Manipulationsversuch gewertet werden, was ebenfalls eine automatische Sperrung des e-Tickets 10 zur Folge haben sollte. Hier besteht die Gefahr, dass ein Nutzer mit unlauteren Absichten, z. B. durch Anlegen von Bohrungen in das e-Tickets 10 die Stromversorgungsleitungen auftrennt und so verhindert, dass das e-Tickets 10 beim Öffnen des Gehäuses den Manipulationsversuch erkennt und entsprechend reagiert. Mit einem Ausfall der Stromversorgung ist im regulären Betrieb nicht zu rechnen, da die Betriebsspannung durch eine Knopfzelle zur Verfügung gestellt wird und da in der Regel aus Gründen der Zuverlässigkeit und aus Kostengründen kein Batteriewechsel vorgesehen ist.

Die konstruktive und funktionale Ausgestaltung des vorstehenden Ausführungsbeispiels der Erfindung gemäss den Figuren 1 und 2 kann wie folgt weiter detailliert werden:
i) Option, dass keine galvanische Verbindung zwischen Leiterplatte 34 und leitfähiger Struktur 32 auf der Innenseite der Abdeckungen 31 vorhanden sein muss. Der Schutz wird mit einer Feldkopplung allein realisiert. Dies erleichtert den Zusammenbau des e-Tickets 10 ganz erheblich.
ii) Die Auswertung erfolgt mittels einer Oszillatorschaltung, deren Schwingfrequenz sich mit den Kapazitätsverhältnissen ändert, die sich ergeben aus der Anordnung von paarweise angeordneten Kupferflächen, denen metallisierte Strukturen 31 auf der Innenseite der Abdeckungen 31 gegenüberstehen.
iii) Ein erkannter Manipulationsversuch (der auch bereits die selbständige Sperrung des Fahrscheins zur Folge hat) wird bei einem erneuten Zustandekommen einer Funkverbindung zu einem Lesegerät im Wagen an das übergeordnete Hintergrundsystem gemeldet. Damit können Polizeikräfte mobilisiert werden zur Festnahme eines solchen Nutzers/Fahrgasts mit den offensichtlich unlauteren und unedlen Absichten.
iv) Ein Ausfall der Energieversorgung, z. B. durch Auftrennen der Anschlussleitungen von der Batterie wird als Manipulationsversuch erkannt und bewirkt eine selbständige und unwiderrufliche Sperrung des e-Tickets 10, eine erneutes Anlegen der Spannung macht den vorgenannten Vorgang nicht reversibel.
v) Die Kommunikation zwischen Leseeinheit auf der Leiterplatte und den RFID-Marken kann als zusätzliche Schutzmassnahme verschlüsselt ausgestaltet werden. Damit können Manipulationsversuche, die darauf abzielen, diese Kommunikation nachzubilden, aufgedeckt werden.
vi) Alternativ können sich die leitfähigen Strukturen auch auf Folien befinden, die ins Gehäuse des e-Tickets 10 eingelegt bzw. von Innen an Teile des Gehäuses geklebt werden und galvanisch, z. B. über Kontaktfedern, mit Schaltungsteilen/Bauelementen auf der Leiterplatte 34 verbunden. Die Schaltung überwacht ständig den Widerstand der Struktur. Bei Manipulationsversuchen, wie z. B. dem Aufbrechen oder Anbohren des Gehäuses werden die Strukturen auf der Folie beschädigt, was eine Änderung des Widerstands der Struktur zur Folge hat, im Extremfall eine Auftrennung einer Verbindung. Bei einer festgestellten Änderung des Widerstands werden z. B. die oben genannten Mechanismen zum Sperren des e-Tickets 10 ausgelöst. Die Strukturen können mäanderförmig auf den Folien angeordnet sein. Anstelle einer galvanischen Verbindung kann eine Kopplung über ein elektromagnetisches Feld vorgesehen sein.
vii) Auf den Innenseiten von Gehäuseteilen oder auch von eingelegten bzw. aufgeklebten Folien befinden sich Antennenstrukturen, die ein bestimmtes Verhalten gegenüber elektromagnetischen Feldern aufweisen. In einfachen Fällen kann es sich dabei z. B. um linienförmige Strukturen 32 / 33 handeln. Schaltungsteile auf der Leiterplatte können die zur Überwachung benötigten elektromagnetischen Felder z. B. durch Oszillatorschaltungen und auf der Leiterplatte integrierte Antennenstrukturen erzeugen. Die Antennenstrukturen auf der Leiterplatte und die Strukturen 32 / 33 auf den Folien / Gehäuseteilen sind kapazitiv / induktiv / elektromagnetisch miteinander verkoppelt. Über die bereits vorhandene Antennenstruktur bzw. eine eigene Antennenstruktur auf der Leiterplatte und geeignete Schaltungen auf der Leiterplatte, z.B. Transmissionsmischer, kann das Wechselstrom-Verhalten der Strukturen auf der Folie oder am Gehäuse überwacht und im Falle eines erkannten Manipulationsversuchs die oben beschriebenen Mechanismen zum Sperren des Fahrscheins ausgelöst werden.
   Im Sinne dieser Schrift werden eine kapazitive Kopplung und eine induktive Kopplung als elektromagnetische Kopplung subsummiert.
iix) Die Antennen sind nicht als in die Leiterplatte oder auf Folien bzw. Gehäuseteilen befindliche integrierte Strukturen, sondern in Form diskreter Bauelemente ausgeführt.

### Liste der Bezugszeichen, Glossar

- 10: e-Ticket
- 31: Abdeckung zu einem flachen e-Ticket, Kunststoffplatte, Abdeckung
- 32: Metallisierte Fläche auf der Innenseite der Abdeckung 31; metallisierte Struktur
- 33: Leitfähige Verbindungen zwischen den metallisieren Flächen/Strukturen 32
- 34: Leiterplatte
- 35: erste Kupferfläche auf der Leiterplatte, entspricht einer Kondensatorplatte
- 36: zweite Kupferfläche auf der Leiterplatte, entspricht einer weiteren Kondensatorplatte
- 37: Oszillator-Schaltung zur Auswertung auf der Leiterplatte
- 38: Dielektrikum des Kondensators, z. B. doppelseitige Selbstklebe-Folie, mit der die Abdeckungen aufgeklebt sind
- 39: Anschlussleitungen zwischen Koppelfläche und Auswerteschaltung

### Liste der zitierten Dokumente

[1] EP 1 201 693 B1
   «Verfahren und System zur Registrierung von Billetten»
[2] «E-Ticketing»
   Siemens Schweiz AG, Industry Sector, Mobility Division, Rail Automation www.litra.ch/download.php?file=dcs/users/2/3 20110316 MF dt.pdf und http://www.litra.ch/dcs/users/2/3 20110316 MF dt.pdf Internes Aktenzeichen: 2012Q25342.
[3] «Inhalt und Struktur der Spezifikationen/Kundenschnittstelle und Zertifizierung in der VDV-Kernapplikation» Präsentation von Dipl.-Ing. Elke Fischer VDV-KERNAPPLIKATIONS GmbH & Co. KG http://www.eticket-deutschland.de/ Internes Aktenzeichen: 2012Q25342.
[4] EP 1 287 585 B1
   «Trägerelement für eine Antenne mit geringer Handempfindlichkeit» Siemens Transit Telematic Systems AG CH - 9552 Bronschhofen SG.
[5] DE 103 26 089 B3
   «Manipulationsüberwachung für eine Schaltung»

## Patentansprüche

1. e-Ticket (10) zur Registrierung einer definierten Anwesenheit desselben in einem Verkehrsmittel, wobei das e-Ticket (10) eine Leiterplatte (34) enthält, auf der Bauelemente angeordnet und miteinander verbunden sind und wobei das e-Ticket (10) einen Energiespeicher aufweist, wobei die Leiterplatte (34) wenigstens einseitig von einer Abdeckung (31) umgeben ist, die auf der der Leiterplatte (34) zugewandten Seite eine metallische Struktur (32) aufweist, die mit Strukturen (36) und/oder Bauelementen (37) auf der Leiterplatte (34) gekoppelt ist, wobei eine Entfernung der metallischen Struktur (32) detektierbar ist und eine Ausserbetriebnahme des e-Tickets (10) bewirkt, und wobei zusätzlich wenigstens eine flache RFID-Marke auf die Innenseite der Abdeckung (31) aufgeklebt ist, wobei die RFID-Marke einen RFID-Chip und eine zugehörige Antennenstruktur aufweist und die RFID-Marke durch eine Leseeinheit auf der Leiterplatte (34) abgefragt wird, wobei die Feststellung eines Abhebens der Abdeckung (31) über die Lesereichweite der Leseeinheit zur RFID-Marke erfolgt.

2. e-Ticket (10) nach Anspruch 1,
**dadurch gekennzeichnet, dass**
die Kopplung der metallischen Struktur (32) mit den Strukturen (36) und/oder Bauelementen (37) auf der Leiterplatte (34) galvanisch und/oder über eine elektromagnetische Verkopplung erfolgt.

3. e-Ticket (10) nach Anspruch 1 oder 2,
**dadurch gekennzeichnet, dass**
die Detektion der Entfernung der metallischen Struktur (32) durch eine Detektion einer Kapazitätsänderung eines Kondensators erfolgt, wobei der Kondensator gebildet ist aus der wenigstens einseitig der Leiterplatte (34) angeordneten metallischen Strukturen (32) und den Strukturen (36) und/oder Bauelementen (37) auf der Leiterplatte (34).

4. e-Ticket (10) nach Anspruch 1 bis 3,
**dadurch gekennzeichnet, dass**
die metallische Struktur (32) auf der Innenseite der Abdeckung (31) aus kompakten Einzelelementen besteht, um die Funktion der im e-Ticket (10) enthaltenen Antennen nicht zu beeinträchtigen.

5. e-Ticket (10) nach einem Ansprüche 1 bis 4,
**dadurch gekennzeichnet, dass**
die Ausserbetriebnahme des e-Tickets (10) funktional die korrekte Erfassung der definierten Anwesenheit im Verkehrsmittel beinhaltet, jedoch eine Kommunikation mit einem Hintergrundsystem aufrechterhalten wird, um das e-Ticket (10) als manipuliert zu registrieren.

6. e-Ticket (10) nach einem Ansprüche 1 bis 4,
**dadurch gekennzeichnet, dass**
die Ausserbetriebnahme des e-Tickets (10) eine dauernde Selbstzerstörung des e-Tickets beinhaltet.

7. e-Ticket (10) nach Anspruch 6,
**dadurch gekennzeichnet, dass**
die Selbstzerstörung des e-Tickets (10) durch Anlegen einer Spannung an ein Bauelement auf der Leiterplatte (34) erfolgt.

8. e-Ticket (10) nach einem Ansprüche 1 bis 4,
**dadurch gekennzeichnet, dass**
die Ausserbetriebnahme des e-Tickets (10) durch Löschen eines Festwertspeichers erfolgt.

9. e-Ticket (10) nach einem Ansprüche 1 bis 4,
**dadurch gekennzeichnet, dass**
die Ausserbetriebnahme durch Abkopplung des Energiespeichers erfolgt.

10. e-Ticket (10) nach einem Ansprüche 1 bis 9,
**dadurch gekennzeichnet, dass**
die metallische Struktur (32) mäanderförmig auf der Abdeckung (31) angeordnet ist.

11. e-Ticket (10) nach einem Ansprüche 1 bis 10,
**dadurch gekennzeichnet, dass**
die Detektion der Entfernung der metallischen Struktur (32) mittels einer Oszillatorschaltung erfolgt, deren Schwingfrequenz sich mit der Kapazitätsänderung beim Anheben oder Entfernen der Abdeckung (31) ändert.

## Claims

1. E-ticket (10) for registering a defined presence of the same in a means of transport, wherein the e-ticket (10) contains a conductor board (34), on which components are arranged and connected to one another and wherein the e-ticket (10) has an energy store, wherein the conductor board (34) is surrounded at least on one side by a cover (31), which has a metallic structure (32) on the side facing the conductor board (34), said metallic structure being coupled to structures (36) and/or components (37) on the conductor board (34), wherein a distance of the metallic structure (32) can be detected and effects a shutdown of the e-ticket (10), and wherein
in addition at least one flat RFID marker is glued to the interior of the cover (31), wherein the RFID marker has an RFID chip and an associated antenna structure and the RFID marker is queried by a read unit on the conductor board (34), wherein the determination of a removal of the cover (31) is carried out by way of the read range of the read unit to the RFID marker.

2. E-ticket (10) according to claim 1,
**characterised in that**
the coupling of the metallic structure (32) to the structures (36) and/or components (37) on the conductor board (34) is carried out galvanically and/or by way of an electromagnetic coupling.

3. E-ticket (10) according to claim 1 or 2,
**characterised in that**
the detection of the removal of the metallic structure (32) is carried out by a detection of a change in capacitance of a capacitor, wherein the capacitor is formed from the metallic structures (32) arranged at least on one side of the conductor board (34) and the structures (36) and/or components (37) on the conductor board (34).

4. E-ticket (10) according to claim 1 to 3,
**characterised in that**
the metallic structure (32) on the interior of the cover (31) consists of compact individual elements, in order not to impair the function of the antennae contained in the e-ticket (10).

5. E-ticket (10) according to one of claims 1 to 4,
**characterised in that**
functionally the shutdown of the e-ticket (10) contains the correct detection of the defined presence in the means of transport, but a communication with a background system is maintained in order to register the e-ticket (10) as manipulated.

6. E-ticket (10) according to one of claims 1 to 4,
**characterised in that**
the shutdown of the e-ticket (10) contains a permanent self-destruction of the e-ticket.

7. E-ticket (10) according to claim 6,
**characterised in that** the self-destruction of the e-ticket (10) is carried out by applying a voltage to a component on the conductor board (34).

8. E-ticket (10) according to one of claims 1 to 4,
**characterised in that**
the shutdown of the e-ticket (10) is carried out by deleting a read-only memory.

9. E-ticket (10) according to one of claims 1 to 4,
**characterised in that**
the shutdown is carried out by decoupling the energy store.

10. E-ticket (10) according to one of claims 1 to 9,
**characterised in that**
the metallic structure (32) is arranged in a meandering shape on the cover (31).

11. E-ticket (10) according to one of claims 1 to 10,
**characterised in that**
the detection of the distance of the metallic structure (32) is carried out by means of an oscillator circuit, the oscillation frequency of which changes with the change in capacitance when the cover (31) is taken off or removed.

## Revendications

1. Ticket électronique (10) permettant d'enregistrer une présence définie de celui-ci dans un moyen de transport, où le ticket électronique (10) contient un circuit imprimé (34) sur lequel des composants sont agencés et reliés ensemble, et le ticket électronique (10) comprend un accumulateur d'énergie, le circuit imprimé (34) étant entouré au moins d'un côté par un revêtement (31) qui comprend une structure métallique (32) sur le côté tourné vers le circuit imprimé (34) qui est couplée à des structures (36) et/ou des composants (37) sur le circuit imprimé (34), et selon lequel un éloignement de la structure métallique (32) est détectable et déclenche la mise hors service du ticket électronique (10), et en outre, au moins une étiquette RFID plate est collée sur la face intérieure du revêtement (31), l'étiquette RFID comprenant une puce RFID et une structure d'antenne associée et l'étiquette RFID étant interrogée par une unité de lecture sur le circuit imprimé (34), et où la détermination d'un décollement du revêtement (31) est effectuée par la portée de lecture de l'unité de lecture vis-à-vis de l'étiquette RFID.

2. Ticket électronique (10) selon la revendication 1,
**caractérisé en ce que** le couplage de la structure métallique (32) aux structures (36) et/ou aux composants (37) sur le circuit imprimé (34) s'effectue de façon galvanique et/ou par un couplage électromagnétique.

3. Ticket électronique (10) selon la revendication 1 ou 2,
**caractérisé en ce que** la détection de l'éloignement de la structure métallique (32) s'effectue par une détection d'une variation de capacité d'un condensateur, le condensateur étant formé par les structures métalliques (32) disposées au moins d'un côté du circuit imprimé (34) et les structures (36) et/ou les composants (37) sur le circuit imprimé (34).

4. Ticket électronique (10) selon l'une des revendications 1 à 3,
**caractérisé en ce que** la structure métallique (32) sur la face intérieure du revêtement (31) est composée d'éléments individuels compacts pour ne pas entraver le fonctionnement des antennes contenues dans le ticket électronique (10).

5. Ticket électronique (10) selon l'une des revendications 1 à 4,
**caractérisé en ce que** la mise hors service du ticket électronique (10) comprend, fonctionnellement, une détection correcte de la présence définie dans le moyen de transport, mais **en ce qu'**une communication avec un système en arrière-plan est maintenue pour enregistrer le ticket électronique (10) comme étant manipulé.

6. Ticket électronique (10) selon l'une des revendications 1 à 4,
**caractérisé en ce que** la mise hors service du ticket électronique (10) comprend une autodestruction permanente du ticket électronique.

7. Ticket électronique (10) selon la revendication 6,
**caractérisé en ce que** l'autodestruction permanente du ticket électronique (10) est réalisée par l'application d'une tension sur un composant sur le circuit imprimé (34) .

8. Ticket électronique (10) selon l'une des revendications 1 à 4,
**caractérisé en ce que** la mise hors service du ticket électronique (10) est effectuée par un effacement d'une mémoire morte.

9. Ticket électronique (10) selon l'une des revendications 1 à 4,
**caractérisé en ce que** la mise hors service est réalisée par un découplage de l'accumulateur d'énergie.

10. Ticket électronique (10) selon l'une des revendications 1 à 9,
**caractérisé en ce que** la structure métallique (32) est agencée sous forme de méandres sur le revêtement (31).

11. Ticket électronique (10) selon l'une des revendications 1 à 10,
**caractérisé en ce que** la détection de l'éloignement de la structure métallique (32) s'effectue au moyen d'un circuit oscillateur, dont la fréquence d'oscillation est modifiée en fonction de la variation de capacité produite lors d'un soulèvement ou d'un éloignement du revêtement (31).
